# EUROPÄISCHE PATENTSCHRIFT

(11) **EP 2 997 864 B1**
(45) Veröffentlichungstag und Bekanntmachung des Hinweises auf die Patenterteilung: **19.07.2017**
(21) Anmeldenummer: 15185445.2
(22) Anmeldetag: 16.09.2015
(51) Int. Cl.: A47J 31/06

(54) **GETRÄNKEMASCHINE**
BEVERAGE MACHINE
MACHINE À BOISSONS

(30) Priorität: 17.09.2014 CN 201410476805
(43) Veröffentlichungstag der Anmeldung: 23.03.2016
(73) Patentinhaber: BSH Hausgeräte GmbH, 81739 München (DE)
(72) Erfinder: Jiang, Ji, 210046 Nanjing (CN); Xue, Chun, 210046 Nanjing (CN); Xue, Qingfei, 212426 JuRong (CN)

(56) Entgegenhaltungen:
- WO-A1-2008/098296
- NL-A- 7 706 110
- US-A- 4 467 707
- US-A- 5 964 143

## Beschreibung

### Gebiet der Technik

Diese Erfindung betrifft eine Getränkemaschine und betrifft insbesondere eine Getränkemaschine, die sowohl Kaffee zubereiten als auch Tee brühen kann.

### Stand der Technik

Jetzige Kaffeemaschinen, wie zum Beispiel in der chinesischen Patentschrift CN201452866 dargestellt, umfassen ein Maschinengehäuse und eine am Maschinengehäuse angeordnete obere Abdeckung. Dabei ist die obere Abdeckung mit dem Maschinengehäuse durch eine feste Schwenkachse verbunden, so dass die obere Abdeckung relativ zum Maschinengehäuse geöffnet und geschlossen werden kann. Oben im Maschinengehäuse ist ein Brühkorb für die Aufnahme des Kaffeepulvers angeordnet, eine Düse und ein Wassertank sind verbunden und sich über dem Brühkorb erstreckend vorgesehen und dienen dazu, dem Inneren des Brühkorbs Heißwasser zuzuführen, so dass durch Vermischen mit dem Kaffeepulver das Kaffeegetränk erzeugt wird. Der Unterteil des Maschinengehäuses ist mit einem Aufnahmeraum ausgebildet, welcher der Platzierung der dazugehörigen Kaffeekanne dient. Nach dem Einsetzen der Kaffeekanne in den Aufnahmeraum stemmt der Oberteil der Kaffeekanne das im Unterteil des Brühkorbs befindliche und außerhalb des Maschinengehäuses vorstehende Ventil nach oben, wodurch veranlasst wird, dass das Kaffeegetränk im Brühkorb in die Kaffeekanne fließt. Wenn jedoch der mit der Kaffeemaschine mitgelieferte Kaffeebrühkorb zum Brühen von Tee oder Früchtetee verwendet werden soll, besteht eine praktikable Methode darin, die Teeblätter oder die Trockenfrüchtescheiben im Brühkorb zu platzieren und sie mit dem kochenden Heißwasser zu Tee oder Früchtetee usw. zu brühen, dieses Zubereitungsverfahren ist mit dem Verfahren zum Brühen von Kaffee identisch, der Nachteil besteht darin, dass das Heißwasser beim Eingießen in den Brühkorb sofort nach dem Begießen wieder abfließt und nicht mit den Teeblättern oder Trockenfrüchtescheiben im Brühkorb zusammen eine bestimmte Zeit ziehen kann, wodurch die Konzentration des zubereiteten Tees oder Früchtetees nicht hoch ist und sich nicht mit dem traditionellen Verfahren zum Brühen von Tee messen lassen kann.

Aus den Druckschriften US 4 467 707, US 5 964 143 und WO 2008/098296 A1 sind Getränkemaschinen mit variabler Wasseraustrittsgeschwindigkeit eines Brühgeräts beim Brühen eines Getränks bekannt.

### Gegenstand der Erfindung

Das Ziel dieser Erfindung besteht darin, eine mit optimiertem Aufbau angeordnete Getränkemaschine bereitzustellen, wodurch die Funktion des kompatiblen Brühens von Tee und Zubereitens von Kaffee realisiert wird.

Zum Erreichen des genannten Ziels legt diese Erfindung eine Getränkemaschine vor, umfassend ein Maschinengehäuse und eine am Oberteil dieses Maschinengehäuses angeordnete Brühkammer, wobei in dieser Brühkammer ein Brühgerät für die Aufnahme des Brühgutes vorgesehen ist, dadurch gekennzeichnet, dass an dem Brühgerät eine Einstellvorrichtung vorgesehen ist, mit der die Wasseraustrittsgeschwindigkeit dieses Brühgeräts beim Brühen eines Getränkes eingestellt wird.

Dadurch, dass die Einstellvorrichtung die Wasseraustrittsgeschwindigkeit des Brühgeräts beim Brühen eines Getränkes einstellt, kann das Verwenden desselben Brühgeräts zum Brühen verschiedener Getränke realisiert werden, zum Beispiel von Tee oder Fruchtgetränken usw., gleichzeitig kann realisiert werden, dass durch unterschiedliche Ziehzeiten des Brühgutes im Brühgerät Getränke mit unterschiedlicher Konzentration gewonnen werden, um den unterschiedlichen Geschmack der Nutzer zu treffen.

Als Erfindung ist an der Seitenwand des Brühgeräts eine Mehrzahl von Wasseraustrittslöchern vorgesehen, umfasst die Einstellvorrichtung eine an der Seitenwand des Brühgeräts angeordnete Abdeckplatte, ist die Abdeckplatte so angeordnet, dass sie beweglich ist und dadurch von dieser Mehrzahl von Wasseraustrittslöchern die Anzahl der Wasseraustrittslöcher, durch die Wasser austreten kann, verändert wird.

Durch die Bewegung der Abdeckplatte an der Seitenwand des Brühgeräts wird die Anzahl der Wasseraustrittslöcher innerhalb der Mehrzahl von Wasseraustrittslöchern, durch die Wasser austreten kann, verändert und im Weiteren eine Veränderung der Wasseraustrittsgeschwindigkeit des Brühgeräts im Prozess des Brühens von Getränken erreicht.

Als eine weitergehende Verbesserung dieser Erfindung ist in der Abdeckplatte an der Fläche, die mit den Wasseraustrittslöchern Kontakt hat, eine weiche Dichtungsschicht vorgesehen, mit der die Wasseraustrittslöcher dicht abgedeckt werden, wenn die Abdeckplatte dahingehend bewegt wird, dass sie einen Teil oder die Gesamtheit der Wasseraustrittslöcher abdeckt.

Als eine weitergehende Verbesserung dieser Erfindung ist die weiche Dichtungsschicht aus Weichgummi hergestellt und mit der Abdeckplatte integriert geformt.

Wenn die Abdeckplatte die Wasseraustrittslöcher abdeckt, kann die weiche Dichtungsschicht die Wasseraustrittslöcher fest abdecken und die Abdichtung der Wasseraustrittslöcher realisieren, so dass das Lecken von Wasser vermieden wird.

Als eine weitergehende Verbesserung dieser Erfindung umfasst die Mehrzahl von Wasseraustrittslöchern eine nahe dem Unterteil des Brühgeräts befindliche untere Wasseraustrittslochgruppe und eine nahe dem Oberteil des Brühgeräts befindliche obere Wasseraustrittslochgruppe, wobei das Bewegen der Abdeckplatte mit dem Schließen oder Öffnen der unteren Wasseraustrittslochgruppe korreliert.

Als eine weitergehende Verbesserung dieser Erfindung sind an der Seitenwand des Brühgeräts Gleitnuten vorgesehen, sind an der Abdeckplatte Steckfüße vorgesehen, welche in diese Gleitnuten eingesteckt werden, so dass sich die Abdeckplatte entlang diesen Gleitnuten vertikal bewegt.

Als eine weitergehende Verbesserung dieser Erfindung sind die Abdeckplatte und die Wasseraustrittslochgruppen folgendermaßen angeordnet: nach dem Bewegen der Abdeckplatte nach unten wird die untere Wasseraustrittslochgruppe von der Abdeckplatte dicht abgedeckt, so dass kein Wasser austreten kann; nach dem Bewegen der Abdeckplatte nach oben wird die untere Wasseraustrittslochgruppe geöffnet, so dass Wasser austritt.

Durch das Bewegen der Abdeckplatte wird die untere Wasseraustrittslochgruppe geöffnet oder geschlossen, wodurch die Steuerung der unterschiedlichen Wasseraustrittsgeschwindigkeiten des Brühgeräts realisiert wird.

Als eine weitergehende Verbesserung dieser Erfindung ist an dem Unterteil des Brühgeräts außerdem eine Sickeröffnung vorgesehen, die nicht durch die Abdeckplatte eingeschränkt wird.

Als eine weitergehende Verbesserung dieser Erfindung sind an dem Brühgerät ein oberer Vorsprung und ein unterer Vorsprung vorgesehen, sind an der Abdeckplatte eine obere Steckaussparung und eine untere Steckaussparung zur Aufnahme des oberen Vorsprungs bzw. unteren Vorsprungs vorgesehen und lautet die Anordnung folgendermaßen: nach dem Bewegen der Abdeckplatte nach oben rastet der obere Vorsprung in die obere Steckaussparung der Abdeckplatte ein und realisiert das Befestigen der Abdeckplatte; nach dem Bewegen der Abdeckplatte nach unten rastet der untere Vorsprung in die untere Steckaussparung der Abdeckplatte ein und realisiert das Befestigen der Abdeckplatte.

Durch das Zusammenwirken der Vorsprünge mit den Steckaussparungen wird das Befestigen der Abdeckplatte an der Seitenwand des Brühgeräts realisiert.

Als eine weitergehende Verbesserung dieser Erfindung beinhaltet die Mehrzahl von Wasseraustrittslöchern Wasseraustrittslochgruppen, die an dem Brühgerät eine horizontal fortlaufende Verteilung aufweisen.

Als eine weitergehende Verbesserung dieser Erfindung sind an der Seitenwand des Brühgeräts horizontale Gleitnuten vorgesehen, sind an der Abdeckplatte Steckfüße vorgesehen, welche in diese Gleitnuten eingesteckt werden, so dass sich die Abdeckplatte entlang diesen Gleitnuten horizontal bewegt.

### Beschreibung der Zeichnungen

- Figur 1: zeigt eine schematische Explosionsdarstellung des Aufbaus einer Getränkemaschine gemäß dieser Erfindung;
- Figur 2: zeigt eine Vorderansicht eines Brühgeräts einer Getränkemaschine gemäß dieser Erfindung;
- Figur 3: zeigt eine schematische Explosionsdarstellung des Aufbaus eines Brühgeräts einer Getränkemaschine gemäß dieser Erfindung;
- Figur 4: zeigt eine weitere schematische Explosionsdarstellung des Aufbaus eines Brühgeräts einer Getränkemaschine gemäß dieser Erfindung;

### Konkrete Ausführungsformen

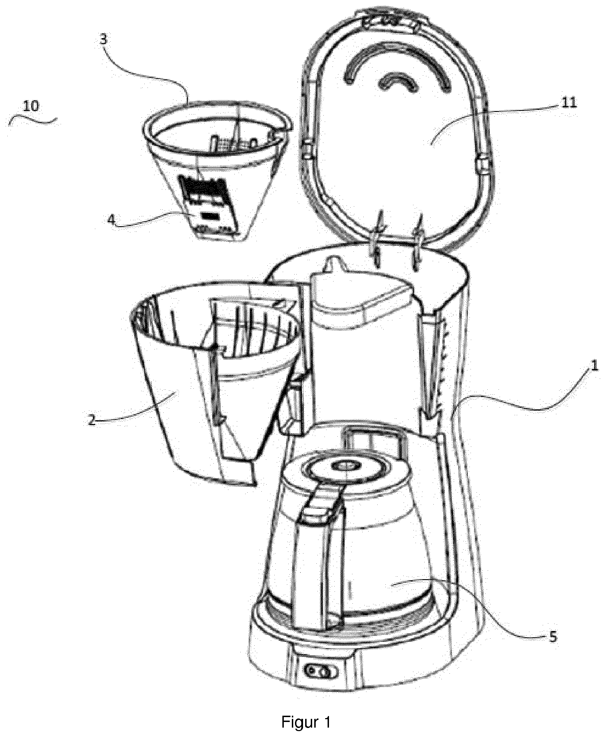

Figur 1 zeigt eine konkrete Ausführungsform der Getränkemaschine dieser Erfindung. In dieser Ausführungsform umfasst die Getränkemaschine 10 das aufrecht stehende Maschinengehäuse 1 und die am Oberteil dieses Maschinengehäuses 1 angeordnete Brühkammer 2, wobei am obersten Teil des Maschinengehäuses 1 außerdem die obere Abdeckung 11, welche diese Brühkammer 2 abdecken kann, angeordnet ist, und unter der Brühkammer 2 die Getränkekanne 5 zum Aufnehmen des aus der Brühkammer 2 herausfließenden Getränks angeordnet ist. In der Brühkammer 2 ist das Brühgerät 3 für das Aufnehmen des Brühgutes vorgesehen, wobei es sich bei dem Brühgut im Allgemeinen um Teeblätter, Trockenfrüchtescheiben oder Kaffee usw handelt. An der Seitenwand des Brühgeräts 3 ist eine Einstellvorrichtung 4' vorgesehen, die dazu dient, die Wasseraustrittsgeschwindigkeit des aus dem Brühgerät 3 austretenden Getränkes einzustellen. Dadurch, dass die Einstellvorrichtung 4' die Wasseraustrittsgeschwindigkeit des Brühgeräts 3 beim Brühen eines Getränkes einstellt, kann das Verwenden desselben Brühgeräts zum Brühen verschiedener Getränke realisiert werden, zum Beispiel von Tee oder Fruchtgetränken usw., gleichzeitig kann realisiert werden, dass durch unterschiedliche Ziehzeiten des Brühgutes im Brühgerät 3 Getränke mit unterschiedlicher Konzentration gewonnen werden, um den unterschiedlichen Geschmack der Nutzer zu treffen.

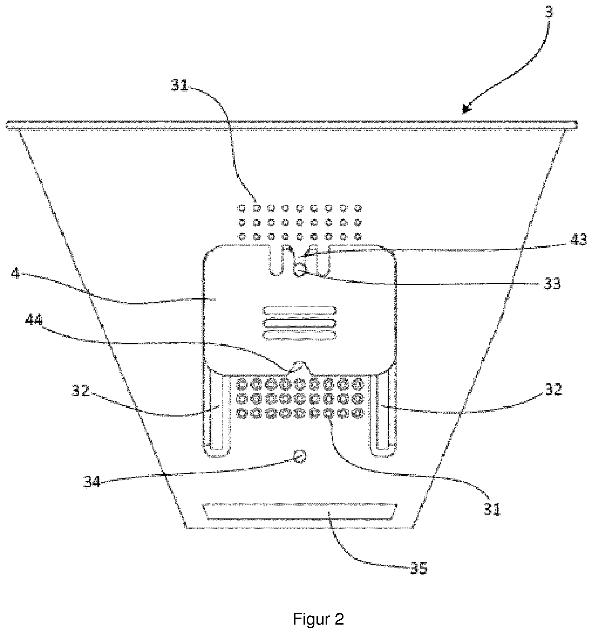

Wie die Figur 2 zeigt, ist an der Seitenwand des Brühgeräts 3 eine Mehrzahl von Wasseraustrittslöchern 31 vorgesehen, umfasst die Einstellvorrichtung 4' eine an der Seitenwand des Brühgeräts 3 angeordnete Abdeckplatte 4, bedeckt die Abdeckplatte 4 die Mehrzahl von Wasseraustrittslöchern 31 und ist sie so angeordnet, dass sie beweglich ist und dadurch von dieser Mehrzahl von Wasseraustrittslöchern 31 die Anzahl der Wasseraustrittslöcher, durch die Wasser austreten kann, verändert wird und im Weiteren eine Veränderung der Wasseraustrittsgeschwindigkeit des Brühgeräts 3 im Prozess des Brühens von Getränken erreicht wird.

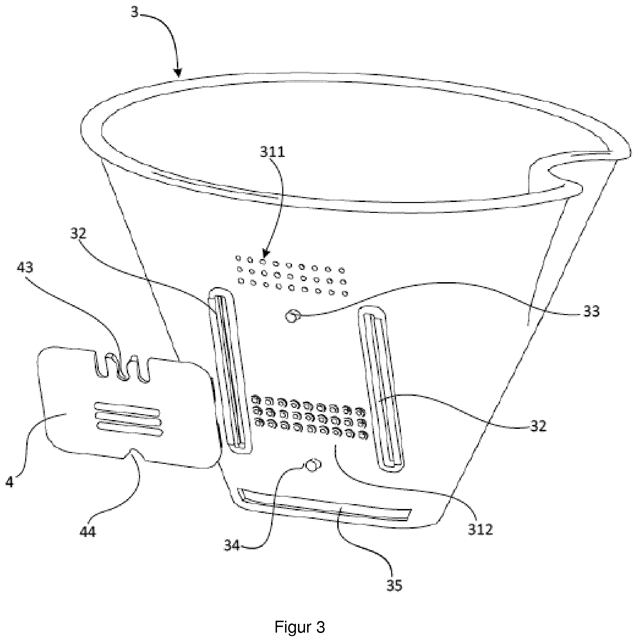

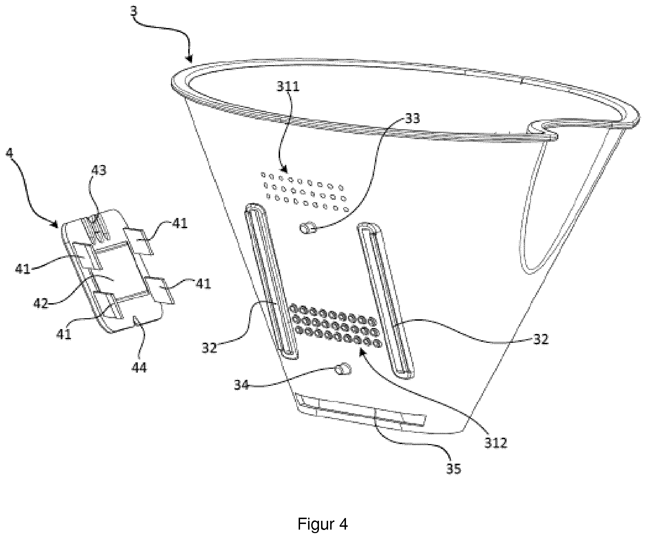

In Verbindung der Darstellungen der Figuren 3 und 4 umfasst die Mehrzahl von Wasseraustrittslöchern 31 an der Seitenwand des Brühgeräts 3 eine nahe dem Unterteil des Brühgeräts 3 befindliche untere Wasseraustrittslochgruppe 312 und eine nahe dem Oberteil des Brühgeräts 3 befindliche obere Wasseraustrittslochgruppe 311. An der linken und rechten Seite der unteren Wasseraustrittslochgruppe 312 ist jeweils eine Gleitnut 32 angeordnet, an der Abdeckplatte 4 sind die Steckfüße 41 vorgesehen, die in diese Gleitnut 32 gesteckt werden können und die Abdeckplatte 4 zum vertikalen Gleiten in ihr veranlassen. Durch die vertikale Bewegung der Abdeckplatte 4 in den Gleitnuten 32 können die unteren Wasseraustrittslöcher 312 geöffnet oder geschlossen werden. Nach dem Bewegen der Abdeckplatte 4 nach unten wird die untere Wasseraustrittslochgruppe 312 von der Abdeckplatte 4 dicht abgedeckt, so dass kein Wasser austreten kann; nach dem Bewegen der Abdeckplatte 4 nach oben wird die untere Wasseraustrittslochgruppe 312 geöffnet, so dass Wasser austritt. In der Abdeckplatte 4 ist an der Fläche, die mit der unteren Wasseraustrittslochgruppe 312 Kontakt hat, die weiche Dichtungsschicht 42 vorgesehen, und wenn die Abdeckplatte 4 dahingehend bewegt wird, dass sie einen Teil oder die Gesamtheit der unteren Wasseraustrittslochgruppe 312 abdeckt, wird diese weiche Dichtungsschicht 42 die Wasseraustrittslöcher dicht abdecken, so dass eine gute Abdichtung realisiert und das Lecken von Wasser vermieden werden. Die weiche Dichtungsschicht 42 ist hauptsächlich aus Weichgummi hergestellt und mit der Abdeckplatte 4 integriert geformt. Am Unterteil des Brühgeräts 3 ist außerdem die Sickeröffnung 35 vorgesehen, die nicht durch die Abdeckplatte 4 eingeschränkt wird und dem langsamen Aussickern des Wassers im Brühgerät 3 dient, wobei die Sickeröffnung 35 hauptsächlich aus einer Siebschicht hergestellt ist.

Durch das Gleiten der Position der Abdeckplatte 4 an der Seitenwand des Brühgeräts 3 kann entsprechend die Konzentration des gebrühten und austretenden Getränkes verändert werden. Zum Beispiel wird beim Brühen von Tee, wenn der Nutzer einen Tee mit etwas höherer Konzentration benötigt, die Abdeckplatte 4 nach unten bewegt und die gesamte untere Wasseraustrittslochgruppe 312 bedeckt. Nach dem Eintreten des Heißwassers in das Brühgerät 3 mit Teeblättern kann, da die Wasseraustrittsgeschwindigkeit der Sickeröffnung 35 kleiner als die Wassereintrittsgeschwindigkeit ist, das Heißwasser das Brühgerät 3 langsam auffüllen und wird nicht durch die am Brühgerät 3 befindliche untere Wasseraustrittslochgruppe 312 abfließen; erst wenn der Pegel des Heißwassers im Brühgerät 3 die obere Wasseraustrittslochgruppe 311 erreicht, fließt das Heißwasser ab, zu dieser Zeit haben die Teeblätter im Heißwasser eine relativ lange Zeit gezogen, weshalb die Konzentration des gebrühten Tees relativ hoch sein wird. Wenn dagegen der Nutzer einen Tee mit etwas niedrigerer Konzentration benötigt, kann die Abdeckplatte 4 nach oben bewegt werden, so dass die Gesamtheit oder zumindest der überwiegende Teil der unteren Wasseraustrittslöcher 312 nicht bedeckt werden, wobei das Heißwasser nach dem Eintreten des Heißwassers in das Brühgerät 3 unmittelbar abfließt, wenn sich der Wasserpegel bis zu der unteren Wasseraustrittslochgruppe 311 gestaut hat, und das Ziehen der Teeblätter im Heißwasser beendet ist, wobei außerdem die Ziehzeit relativ kurz ist, weshalb die Konzentration des gebrühten Tees relativ niedrig sein wird.

Am Brühgerät 3 sind der obere Vorsprung 33 und der untere Vorsprung 34 vorgesehen, an der Abdeckplatte 4 sind die obere Steckaussparung 43 und die untere Steckaussparung 44 zur Aufnahme des oberen Vorsprungs 33 bzw. des unteren Vorsprungs 34 vorgesehen. Nach dem Bewegen der Abdeckplatte 4 nach oben rastet der obere Vorsprung 33 in die obere Steckaussparung 43 der Abdeckplatte ein und realisiert das Befestigen der Abdeckplatte 4; nach dem Bewegen der Abdeckplatte 4 nach unten rastet der untere Vorsprung 34 in die untere Steckaussparung 44 der Abdeckplatte ein und realisiert das Befestigen der Abdeckplatte 4. Durch das Zusammenwirken der Vorsprünge mit den Steckaussparungen wird das bessere Befestigen der Abdeckplatte 4 an der Seitenwand des Brühgeräts 3 realisiert.

Die Reihe von detaillierten Beschreibungen, die im vorstehenden Text aufgeführt werden, sind lediglich auf diese Erfindung gerichtete konkrete Beschreibungen möglicher Ausführungsformen, sie dienen keineswegs dazu, den Schutzumfang dieser Erfindung einzuschränken. Zum Beispiel ist in einer anderen Ausführungsform an der oberen und unteren Seite der Wasseraustrittslochgruppe eine Gleitnut vorgesehen, die in diesen Gleitnuten montierte Abdeckplatte kann sich horizontal bewegen und das Öffnen oder Schließen der unteren Wasseraustrittslochgruppe realisieren; es ist sogar möglich, die Wasseraustrittslöcher nicht notwendigerweise in einer oberen und unteren Wasseraustrittslochgruppe zu verteilen, sondern es ist möglich, die gesamte Mehrzahl von Wasseraustrittslöchern an der Seitenwand des Brühgeräts fortlaufend peripher zu verteilen, und die Abdeckplatte, welche diese Mehrzahl von Wasseraustrittslöchern bedeckt, kann dann durch peripheres Gleiten an der Seitenwand die Anzahl der Wasseraustrittslöcher innerhalb der fortlaufend verteilten Mehrzahl von Wasseraustrittslöchern, durch die Wasser austreten kann, verändern und im Weiteren die Wasseraustrittsgeschwindigkeit des Brühgeräts verändern; außerdem können die oben genannte obere und untere Wasseraustrittslochgruppe oder die Mehrzahl von Wasseraustrittslöchern durch Siebe ersetzt werden und die identische Funktion des Wasseraustritts realisieren. Deshalb sollen alle äquivalenten Ausführungsformen oder Modifikationen, die ohne Verlassen des Gedankens der Erfindung gemacht werden, im Schutzumfang dieser Erfindung enthalten sein.

### Bezugszahlen:

- 10: Getränkemaschine
- 1: Maschinengehäuse
- 11: obere Abdeckung
- 2: Brühkammer
- 3: Brühgerät
- 31: Wasseraustrittslöcher
- 311: obere Wasseraustrittslochgruppe
- 312: untere Wasseraustrittslochgruppe
- 32: Gleitnut
- 33: oberer Vorsprung
- 34: unterer Vorsprung
- 35: Sickeröffnung
- 4': Einstellvorrichtung
- 4: Abdeckplatte
- 41: Steckfüße
- 42: weiche Dichtungsschicht
- 43: obere Steckaussparung
- 44: untere Steckaussparung
- 5: Getränkekanne

## Patentansprüche

1. Getränkemaschine, umfassend ein Maschinengehäuse (1) und eine am Oberteil dieses Maschinengehäuses (1) angeordnete Brühkammer (2), wobei in dieser Brühkammer (2) ein Brühgerät (3) für die Aufnahme des Brühgutes vorgesehen ist, und wobei an dem Brühgerät (3) eine Einstellvorrichtung (4') vorgesehen ist, mit der die Wasseraustrittsgeschwindigkeit dieses Brühgeräts (3) beim Brühen eines Getränkes eingestellt wird, **dadurch gekennzeichnet, dass** an der Seitenwand des Brühgeräts (3) eine Mehrzahl von Wasseraustrittslöchern (31) vorgesehen ist, die Einstellvorrichtung (4') eine an der Seitenwand des Brühgeräts (3) angeordnete Abdeckplatte (4) umfasst, die Abdeckplatte (4) so angeordnet ist, dass sie beweglich ist und dadurch von dieser Mehrzahl von Wasseraustrittslöchern (31) die Anzahl der Wasseraustrittslöcher, durch die Wasser austreten kann, verändert wird.

2. Getränkemaschine gemäß Anspruch 1, **dadurch gekennzeichnet, dass** in der Abdeckplatte (4) an der Fläche, die mit den Wasseraustrittslöchern (31) Kontakt hat, eine weiche Dichtungsschicht (42) vorgesehen ist, mit der die Wasseraustrittslöcher (31) dicht abgedeckt werden, wenn die Abdeckplatte (4) dahingehend bewegt wird, dass sie einen Teil oder die Gesamtheit der Wasseraustrittslöcher (31) abdeckt.

3. Getränkemaschine gemäß Anspruch 2, **dadurch gekennzeichnet, dass** die weiche Dichtungsschicht (42) aus Weichgummi hergestellt ist und mit der Abdeckplatte (4) integriert geformt ist.

4. Getränkemaschine gemäß Anspruch 1, **dadurch gekennzeichnet, dass** die Mehrzahl von Wasseraustrittslöchern (31) eine nahe dem Unterteil des Brühgeräts (3) befindliche untere Wasseraustrittslochgruppe (312) und eine nahe dem Oberteil des Brühgeräts (3) befindliche obere Wasseraustrittslochgruppe (311) umfasst, wobei das Bewegen der Abdeckplatte (4) mit dem Schließen oder Öffnen der unteren Wasseraustrittslochgruppe (311) korreliert.

5. Getränkemaschine gemäß Anspruch 4, **dadurch gekennzeichnet, dass** an der Seitenwand des Brühgeräts (3) Gleitnuten (32) vorgesehen sind, an der Abdeckplatte (4) Steckfüße (41) vorgesehen sind, welche in diese Gleitnuten (32) eingesteckt werden, so dass sich die Abdeckplatte (4) entlang diesen Gleitnuten (32) vertikal bewegt.

6. Getränkemaschine gemäß Anspruch 5, **dadurch gekennzeichnet, dass** die Abdeckplatte (4) und die Wasseraustrittslochgruppen (311, 312) folgendermaßen angeordnet sind: nach dem Bewegen der Abdeckplatte (4) nach unten wird die untere Wasseraustrittslochgruppe (312) von der Abdeckplatte (4) dicht abgedeckt, so dass kein Wasser austreten kann; nach dem Bewegen der Abdeckplatte (4) nach oben wird die untere Wasseraustrittslochgruppe (312) geöffnet, so dass Wasser austritt.

7. Getränkemaschine gemäß Anspruch 4, **dadurch gekennzeichnet, dass** an dem Unterteil des Brühgeräts (3) außerdem eine Sickeröffnung (35), die nicht durch die Abdeckplatte (4) eingeschränkt wird, vorgesehen ist.

8. Getränkemaschine gemäß Anspruch 5, **dadurch gekennzeichnet, dass** an dem Brühgerät (3) ein oberer Vorsprung (33) und ein unterer Vorsprung (34) vorgesehen sind, an der Abdeckplatte (4) eine obere Steckaussparung (43) und eine untere Steckaussparung (44) zur Aufnahme des oberen Vorsprungs (33) bzw. unteren Vorsprungs (34) vorgesehen sind und die Anordnung folgendermaßen lautet: nach dem Bewegen der Abdeckplatte (4) nach oben rastet der obere Vorsprung (33) in die obere Steckaussparung (43) der Abdeckplatte ein und realisiert das Befestigen der Abdeckplatte (4); nach dem Bewegen der Abdeckplatte (4) nach unten rastet der untere Vorsprung (34) in die untere Steckaussparung (44) der Abdeckplatte ein und realisiert das Befestigen der Abdeckplatte (4).

9. Getränkemaschine gemäß Anspruch 1, **dadurch gekennzeichnet, dass** die Mehrzahl von Wasseraustrittslöchern (31) Wasseraustrittslochgruppen beinhaltet, die an dem Brühgerät (3) eine horizontal fortlaufende Verteilung aufweisen.

10. Getränkemaschine gemäß Anspruch 9, **dadurch gekennzeichnet, dass** an der Seitenwand des Brühgeräts (3) horizontale Gleitnuten vorgesehen sind, an der Abdeckplatte Steckfüße vorgesehen sind, welche in diese Gleitnuten eingesteckt werden, so dass sich die Abdeckplatte entlang diesen Gleitnuten horizontal bewegt.

## Claims

1. Beverage machine comprising a machine housing (1) and a brewing chamber (2) arranged on the upper part of this machine housing (1), wherein a brewing apparatus (3) for receiving the goods to be brewed is provided in this brewing chamber (2), and wherein an adjusting device (4') is provided on the brewing apparatus (3), with which the water outlet speed of this brewing apparatus (3) is adjusted when a beverage is brewed, **characterised in that** a plurality of water outlet holes (31) is provided on the side wall of the brewing apparatus (3), the adjusting device (4') comprises a cover plate (4) arranged on the side wall of the brewing apparatus (3), the cover plate (4) is arranged such that it is moveable and as a result of this plurality of water outlet holes (31) the number of water outlet holes through which water can escape is changed

2. Beverage machine according to claim 1, **characterised in that** a soft impermeable layer (42) is provided in the cover plate (4) on the surface which is in contact with the water outlet holes (31), with which impermeable layer the water outlet holes (31) are covered tightly when the cover plate (4) is moved such that it covers one part of or the entirety of the water outlet holes (31).

3. Beverage machine according to claim 2, **characterised in that** the soft impermeable layer (42) is manufactured from soft rubber and is moulded in an integrated manner with the cover plate (4).

4. Beverage machine according to claim 1, **characterised in that** the plurality of water outlet holes (31) comprises a lower water outlet hole group (312) disposed close to the lower part of the brewing apparatus (3), and an upper water outlet hole group (311) disposed close to the upper part of the brewing apparatus (3), wherein the movement of the cover plate (4) correlates with the closing or opening of the lower water outlet hole group (311).

5. Beverage machine according to claim 4, **characterised in that** sliding grooves (32) are provided on the side wall of the brewing apparatus (3) and plug-in legs (41) are provided on the cover plate (4), said plug-in legs being inserted into these sliding grooves (32) so that the cover plate (4) moves vertically along these sliding grooves (32).

6. Beverage machine according to claim 5, **characterised in that** the cover plate (4) and the water outlet hole groups (311, 312) are arranged as follows: after the cover plate (4) is moved downward, the lower water outlet hole group (312) is covered tightly by the cover plate (4) so that no water can escape; after the cover plate (4) is moved upward, the lower water outlet hole group (312) is opened so that water escapes.

7. Beverage machine according to claim 4, **characterised in that** a seepage opening (35) which is not restricted by the cover plate (4) is also provided on the lower part of the brewing apparatus (3).

8. Beverage machine according to claim 5, **characterised in that** an upper projection (33) and a lower projection (34) are provided on the brewing apparatus (3), an upper plug-in recess (43) and a lower plug-in recess (44) for receiving the upper projection (33) or lower projection (34) are provided on the cover plate (4) and the arrangement is as follows: after the cover plate (4) is moved upward, the upper projection (33) latches into the upper plug-in recess (43) of the cover plate and realises the fastening of the cover plate (4); after the cover plate (4) is moved downward, the lower projection (34) latches into the lower plug-in recess (44) of the cover plate and realises the fastening of the cover plate (4).

9. Beverage machine according to claim 1, **characterised in that** the plurality of water outlet holes (31) contains water outlet hole groups, which have a distribution which runs horizontally on the brewing apparatus (3).

10. Beverage machine according to claim 9, **characterised in that** horizontal sliding grooves are provided on the side wall of the brewing apparatus (3), on which cover plate plug-in legs are provided, which are inserted into these sliding grooves so that the cover plate moves horizontally along these sliding grooves.

## Revendications

1. Machine de préparation de boissons comprenant un boîtier de machine (1) et une chambre de percolation (2) disposée sur la partie supérieure de ce boîtier de machine (1), un appareil de percolation (3) étant ménagé dans cette chambre de percolation (2) pour réceptionner le produit à percoler, et un dispositif de réglage (4') étant ménagé sur l'appareil de percolation (3), à l'aide duquel dispositif de réglage la vitesse de sortie de l'eau de cet appareil de percolation (3) est réglée lors de la percolation d'une boisson, **caractérisée en ce qu'**une pluralité de trous de sortie d'eau (31) est ménagée sur la paroi latérale de l'appareil de percolation (3), **en ce que** le dispositif de réglage (4') comprend une plaque de recouvrement (4) disposée sur la paroi latérale de l'appareil de percolation (3), **en ce que** la plaque de recouvrement (4) est disposée de manière à être mobile et qu'ainsi, le nombre de trous de sortie d'eau à travers lesquels l'eau peut sortir est modifié par cette pluralité de trous de sortie d'eau (31).

2. Machine de préparation de boissons selon la revendication 1, **caractérisée en ce que** dans la plaque de recouvrement (4) est ménagée une couche d'étanchéité (42) souple sur la surface qui est en contact avec les trous de sortie d'eau (31), au moyen de laquelle couche d'étanchéité les trous de sortie d'eau (31) sont recouverts de manière étanche lorsque la plaque de recouvrement (4) est déplacée de manière à ce qu'elle recouvre une partie ou la totalité des trous de sortie d'eau (31).

3. Machine de préparation de boissons selon la revendication 2, **caractérisée en ce que** la couche d'étanchéité (42) souple est fabriquée en caoutchouc souple et est formée en étant intégrée avec la plaque de recouvrement (4).

4. Machine de préparation de boissons selon la revendication 1, **caractérisée en ce que** la pluralité de trous de sortie d'eau (31) comprend un groupe inférieur (312) de trous de sortie d'eau situé près de la partie inférieure de l'appareil de percolation (3) et un groupe supérieur (311) de trous de sortie d'eau situé près de la partie supérieure de l'appareil de percolation (3), le déplacement de la plaque de recouvrement (4) étant en corrélation avec la fermeture ou l'ouverture du groupe inférieur (311) de trous de sortie d'eau.

5. Machine de préparation de boissons selon la revendication 4, **caractérisée en ce que** des rainures de glissement (32) sont ménagées sur la paroi latérale de l'appareil de percolation (3), **en ce que** des pieds d'emboîtement (41) sont ménagés sur la plaque de recouvrement (4), lesquels sont enfoncés dans ces rainures de glissement (32) de sorte que la plaque de recouvrement (4) se déplace verticalement le long de ces rainures de glissement (32).

6. Machine de préparation de boissons selon la revendication 5, **caractérisée en ce que** la plaque de recouvrement (4) et les groupes (311, 312) de trous de sortie d'eau sont disposés de la façon suivante : après le déplacement de la plaque de recouvrement (4) vers le bas, le groupe inférieur (312) de trous de sortie d'eau est recouvert de manière étanche par la plaque de recouvrement (4) de sorte que l'eau ne peut pas sortir ; après le déplacement de la plaque de recouvrement (4) vers le haut, le groupe inférieur (312) de trous de sortie d'eau est ouvert de sorte que l'eau sort.

7. Machine de préparation de boissons selon la revendication 4, **caractérisée en ce qu'**une ouverture d'écoulement (35), qui n'est pas restreinte par la plaque de recouvrement (4), est en outre ménagée sur la partie inférieure de l'appareil de percolation (3).

8. Machine de préparation de boissons selon la revendication 5, **caractérisée en ce qu'**une saillie supérieure (33) et une saillie inférieure (34) sont ménagées sur l'appareil de percolation (3), **en ce qu'**un évidement d'emboîtement supérieur (43) et un évidement d'emboîtement inférieur (44) sont ménagés sur la plaque de recouvrement (4) pour le logement de la saillie supérieure (33) resp, de la saillie inférieure (34), et **en ce que** la disposition est la suivante : après le déplacement de la plaque de recouvrement (4) vers le haut, la saillie supérieure (33) s'enclenche dans l'évidement d'emboîtement supérieur (43) de la plaque de recouvrement et réalise la fixation de la plaque de recouvrement (4) ; après le déplacement de la plaque de recouvrement (4) vers le bas, la saillie inférieure (34) s'enclenche dans l'évidement d'emboîtement inférieur (44) de la plaque de recouvrement et réalise la fixation de la plaque de recouvrement (4).

9. Machine de préparation de boissons selon la revendication 1, **caractérisée en ce que** la pluralité de trous de sortie d'eau (31) comprend des groupes de trous de sortie d'eau qui présentent une répartition horizontale continue sur l'appareil de percolation (3).

10. Machine de préparation de boissons selon la revendication 9, **caractérisée en ce que** des rainures de glissement horizontales sont ménagées sur la paroi latérale de l'appareil de percolation (3), **en ce que** des pieds d'emboîtement sont ménagés sur la plaque de recouvrement, lesquels sont enfoncés dans ces rainures de glissement de sorte que la plaque de recouvrement se déplace horizontalement le long de ces rainures de glissement.
